# EUROPÄISCHE PATENTSCHRIFT

(11) **EP 2 528 868 B1**
(45) Veröffentlichungstag und Bekanntmachung des Hinweises auf die Patenterteilung: **16.04.2014**
(21) Anmeldenummer: 11701122.1
(22) Anmeldetag: 26.01.2011
(51) Int. Cl.: C02F 1/00, C02F 1/42

(54) **VERFAHREN ZUM BETRIEB EINER WASSERBEHANDLUNGSANLAGE MIT KORREKTUR VON KALIBRIERKENNLINIEN**
METHOD FOR OPERATING A WATER TREATMENT PLANT WITH CORRECTION OF CHARACTERISTIC CALIBRATION CURVES
PROCÉDÉ DE FONCTIONNEMENT D'UNE INSTALLATION DE TRAITEMENT DE L'EAU COMPRENANT UNE CORRECTION DES COURBES CARACTÉRISTIQUES D'ÉTALONNAGE

(30) Priorität: 29.01.2010 DE 102010001373
(43) Veröffentlichungstag der Anmeldung: 05.12.2012
(73) Patentinhaber: Judo Wasseraufbereitung GmbH, 71364 Winnenden (DE)
(72) Erfinder: SÖCKNICK, Ralf, 70806 Kornwestheim (DE)
(74) Vertreter: Kohler Schmid Möbus
(86) Internationale Anmeldenummer: PCT/EP2011/051032
(87) Internationale Veröffentlichungsnummer: WO 2011/092184

(56) Entgegenhaltungen:
- WO-A2-2009/071066

## Beschreibung

Die Erfindung betrifft ein Verfahren zum Betrieb einer Wasserbehandlungsanlage mit
- einer Enthärtungsvorrichtung, insbesondere umfassend ein lonentauscherharz,
- einem Leitfähigkeitssensor,
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ, wobei das Verfahren folgende Schritte aufweist:
- Bestimmung der elektrischen Leitfähigkeit des Roh-, Weich- oder Verschnittwassers mittels des Leitfähigkeitssensors und daraus Bestimmung der Gesamthärte G_{LF} des Rohwassers mit einer oder mehreren in einer elektronischen Steuereinrichtung hinterlegten Kalibrierkennlinien,
- Steuerung der Verstellposition der Verschneideeinrichtung mittels der elektronischen Steuereinrichtung unter Berücksichtigung der bestimmten Gesamthärte G_{LF} des Rohwassers, so dass die Wasserhärte im Verschnittwasserstrom V(t)_{verschnitt} auf einen vorgegebenen Sollwert (SW) eingestellt wird.

Ein solches Verfahren ist bekannt geworden aus der DE 10 2007 059 058 B3.

Wasserenthärtung wird überall da eingesetzt, wo über die üblichen Versorgungssysteme (etwa das Trinkwassernetz) lediglich relativ hartes Wasser zur Verfügung steht, jedoch aus technischen Gründen oder Komfortgründen ein weicheres Wasser erwünscht ist.

Bei der Wasserenthärtung werden Enthärtungsvorrichtungen eingesetzt, die meist nach dem lonenaustauschverfahren arbeiten. Die im Wasser enthaltenen Härtebildner (Calcium- und Magnesium-lonen) werden dabei in einem lonentauscherharz gegen Natrium-Ionen ausgetauscht. Bei Erschöpfung des lonentauscherharzes muss dieses regeneriert werden, etwa durch Spülung mit einer Salzsole.

Aus technischen oder wirtschaftlichen Gründen ist es oft notwendig oder erwünscht, kein vollenthärtetes Wasser, sondern Wasser mit einer mittleren, jedoch eng definierten Wasserhärte zur Verfügung zu haben. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit mit hohen Kosten verbunden. Zur Durchführung einer Teilenthärtung ist eine Vorrichtung (Verschneideeinrichtung) zum Mischen von enthärtetem Wasser (auch als Weichwasser bezeichnet) und Rohwasser notwendig. In der Regel ist es erwünscht, die Wasserhärte im Verschnittwasser, das ist das Gemisch von enthärtetem Wasser und Rohwasser, einzustellen und zu steuern.

Die DE 10 2007 059 058 B3 beschreibt eine Wasserenthärtungsanlage, bei der die Leitfähigkeit des Rohwassers mittels eines Leitfähigkeitssensors bestimmt wird. Die Gesamthärte des Rohwassers, die zur Steuerung der Verschneideeinrichtung verwendet wird, wird anhand einer Kalibrierkennlinie (F2) aus der gemessenen Leitfähigkeit abgeleitet.

Die Figur 1 der DE 10 2007 059 058 B3 zeigt, dass die aus der Kalibrierkennlinie (F2) bestimmte Wasserhärte einen mittleren Wert aller bei dieser Leitfähigkeit vorkommenden Wasserhärten darstellt. Die bei einer bestimmten Leitfähigkeit tatsächlich vorliegende Wasserhärte kann um einige °dH von diesem mittleren Wert abweichen.

Leitfähigkeitssensoren sind kostengünstig und einfach in ihrer Anwendung, haben jedoch den Nachteil, dass die erfasste Leitfähigkeit ein Summenparameter darstellt, der alle im Wasser gelöste Ionen erfasst. Die Leitfähigkeit ist daher nur bedingt proportional zur Wasserhärte, d.h. zum Calcium- und Magnesiumgehalt des Wassers. In einzelnen Fällen, insbesondere, wenn die Leitfähigkeit des Rohwassers erheblich durch einen hohen natürlichen Gehalt an Natrium-Ionen (und nicht durch Härtebildner) verursacht wird, kann es daher zu größeren Abweichungen der mittels einer Standard- Kalibrierkennlinie bestimmten Gesamthärte des Rohwassers vom tatsächlichen Wert kommen.

### Aufgabe der Erfindung

Es ist Aufgabe der vorliegenden Erfindung, ein Verfahren vorzustellen, bei dem die automatische Steuerung der Verschneideeinrichtung bei verschiedenen Rohwasserzusammensetzungen mit hoher Genauigkeit und kostengünstig möglich ist.

### Kurze Beschreibung der Erfindung

Diese Aufgabe wird in einer ersten Ausprägung der Erfindung gelöst durch ein Verfahren der eingangs genannten Art, das dadurch gekennzeichnet ist, dass eine Verschnittwasserhärte V_{NK} nicht-konduktometrisch bestimmt und mit dem Sollwert (SW) verglichen wird,
und dass eine oder mehrere Kalibrierkennlinien zur Bestimmung der Gesamthärte G_{LF} des Rohwassers abgeändert werden, wenn die Abweichung der nicht-konduktometrisch bestimmten Verschnittwasserhärte V_{NK} vom Sollwert (SW) einen Grenzwert überschreitet.

Die eine oder mehreren Kalibrierkennlinien werden dann so abgeändert, dass sich aus der gemessenen elektrischen Leitfähigkeit des Roh-, Weich- oder Verschnittwassers mit der einen oder den mehreren, abgeänderten Kalibrierkennlinien eine Verschnittwasserhärte V_{LF} ergibt, die der nichtkonduktometrisch bestimmten Verschnittwasserhärte V_{NK} entspricht. Die nicht-konduktometrische Härtemessung im Verschnittwasser erlaubt eine unmittelbare und daher leichte Kontrolle und Bewertung des Steuerungserfolgs der Wasserbehandlungsanlage bzw. der Kalibrierung der Verschneidung. Die Einstellung der Verschnittwasserhärte kann in sehr zuverlässiger Weise vom Anwender selbst nachvollzogen werden. Hinzu tritt, dass das Verschnittwasser bei installierter Wasserbehandlungsanlage leicht zugänglich ist, nämlich über reguläre Wasserentnahmen hinter der Wasserbehandlungsanlage.

In einer zweiten Ausprägung der Erfindung wird diese Aufgabe gelöst durch ein Verfahren der eingangs genannten Art, das dadurch gekennzeichnet ist, dass eine Gesamthärte G_{NK} des Rohwassers nicht konduktometrisch bestimmt wird und mit der über die Leitfähigkeit bestimmten Gesamthärte G_{LF} des Rohwassers verglichen wird,
und dass eine oder mehrere Kalibrierkennlinien zur Bestimmung der Gesamthärte G_{LF} des Rohwassers abgeändert werden, wenn die Abweichung der nicht-konduktometrisch bestimmten Gesamthärte G_{NK} von der über die Leitfähigkeit bestimmten Gesamthärte G_{LF} einen Grenzwert überschreitet.

Die eine oder mehreren Kalibrierkennlinien werden dann so abgeändert, dass sich aus der gemessenen elektrischen Leitfähigkeit des Roh-, Weich- oder Verschnittwassers mit der einen oder den mehreren, abgeänderten Kalibrierkennlinien eine Gesamthärte G_{LF} des Rohwassers ergibt, die der nicht-konduktometrisch bestimmten Gesamthärte G_{NK} des Rohwassers entspricht. Bei nicht-konduktometrischer Härtebestimmung im Rohwasser ist die Korrektur der einen oder der mehreren Kennlinien erleichtert, da eine Gewichtung von Roh- und Weichwasseranteilen entfallen kann. Um eine Entnahme von Rohwasser etwa für eine Titration durchführen zu können, kann vor die Wasserbehandlungsanlage ein Entnahmeventil montiert werden; alternativ kann auch eine Bypassfunktion der Wasserbehandlungsanlage für die Rohwasserentnahme eingerichtet sein.

### Überblick über die Erfindung

Die Bestimmung der Gesamthärte eines Wassers aus der gemessenen Leitfähigkeit kann in Ausnahmefällen, insbesondere, wenn die Leitfähigkeit des Wassers erheblich durch einen hohen natürlichen Gehalt an Natrium-Ionen (und nicht durch Härtebildner) verursacht wird, ungenau sein. Die Verschnittwasserhärte weicht in diesen Fällen vom Sollwert (SW) ab, da zur Steuerung der Verschneideeinrichtung die aus der gemessenen Leitfähigkeit abgeleitete Gesamthärte des Rohwassers herangezogen wird.

Durch die Korrektur der Kalibrierkennlinie oder Kalibrierkennlinien wird der Leitfähigkeitssensor (bzw. die Steuerung) nachkalibriert und dem vorliegenden Wasser individuell angepasst, so dass die Gesamthärte des Rohwassers aus der gemessenen Leitfähigkeit exakt bestimmt werden kann. Die Verschnittwasserhärte entspricht dann (nach der Abänderung) genau dem Sollwert (SW).

### Konduktometrische Bestimmung der Rohwasserhärte und Vermittlung der Verschnittwasserhärte

Im einfachsten Fall wird die Gesamthärte des Rohwassers über die Leitfähigkeit des Rohwassers bestimmt, und mit nur einer Kalibrierkennlinie wird die Leitfähigkeit in die Härte umgerechnet. Falls zur Bestimmung der Gesamthärte des Rohwassers die Leitfähigkeit im Weichwasser gemessen wird, muss die Kalibrierung zusätzlich berücksichtigen, dass sich die Leitfähigkeit durch den stöchiometrischen Austausch der Härtebildner (Calcium- und Magnesium-lonen) gegen jeweils zwei Natrium-Ionen entsprechend geändert hat; in diesem Fall werden oftmals mehrere Kalibrierkennlinien hintereinander eingesetzt (eine erste Kalibrierkennlinie kann dann die durch den lonenaustausch veränderte Leitfähigkeit auf eine korrigierte, dem Rohwasser entsprechende Leitfähigkeit abbilden, und eine zweite Kalibrierkennlinie bildet die korrigierte, dem Rohwasser entsprechende Leitfähigkeit auf die Rohwasserhärte ab). Bei experimenteller Bestimmung der Leitfähigkeit im Verschnittwasser muss darüber hinaus eine Gewichtung der lonenaustausch-Korrektur gemäß den prozentualen Anteilen der beiden Teilströme V(t)_{teil1weich} und V(t)ₜₑᵢₗ₂ᵣₒₕ erfolgten.

Die Verschnittwasser-Härtebestimmung erfolgt im Rahmen der Steuerung grundsätzlich über die aus der Leitfähigkeitsmessung (also konduktometrisch) ermittelte Gesamthärte G_{LF} des Rohwassers und den Anteilen der Teilströme (die direkt oder indireckt über Wasserzähler ermittelt werden oder über die Einstellung der Verschneideeinrichtung geschätzt werden).

### Nicht-konduktometrische Närtemessung zur Kalibrierung

Eine erfindungsgemäße nicht-konduktometrische Härtebestimmung kann beispielsweise bei Inbetriebnahme der Wasserbehandlungsanlage titrimetrisch mit einem handelsüblichen Messbesteck am Einsatzort durchgeführt werden. Derartige Härtebestimmungen sind einfach in ihrer Anwendung und liefern genaue Ergebnisse. Ebenso kann eine nicht-konduktometrische Härtebestimmung mittels einer ionensensitiven Elektrode durchgeführt werden.

Die nicht-konduktometrisch bestimmte Verschnittwasserhärte oder Rohwasserhärte wird mit einem geeigneten Eingabemittel (etwa einer Tastatur, einer Stellschraube, einem Wahlhebel oder einem elektronischen Signaleingang) in die elektronische Steuereinrichtung eingegeben. Die Elektronik vergleicht die nicht-konduktometrisch bestimmte Verschnittwasserhärte V_{NK} mit dem Sollwert SW bzw. die nicht-konduktometrisch bestimmte Rohwasserhärte G_{NK} mit der über die Leitfähigkeit bestimmten Rohwasserhärte G_{LF}, rechnet aus der Abweichung der beiden Werte auf eine oder mehrere neue, exakte Kalibrierkennlinien zurück und ändert die eine oder mehreren letztgültigen Kalibrierkennlinien entsprechend ab. Üblicherweise sind in der elektronischen Steuerung auch eine oder mehrere Standard-Kalibrierkennlinien dauerhaft abgespeichert, die für die Verschneidungssteuerung (oder auch die Regenerationssteuerung) herangezogen werden können, soweit keine gültige, nicht-konduktometrisch bestimmte Wasserhärte für eine Kalibrierung entsprechend der lokalen Wasserzusammensetzung zur Verfügung steht.

Zur erfindungsgemäßen Abänderung der Kalibrierung genügt es typischerweise, bei einer durch eine Ursprungsgerade gebildeten Kalibrierkennlinie, welche die Rohwasser-Leitfähigkeit auf die ROhwasser-Härte abbildet, deren Steigung (als einzige Unbekannte) neu zu bestimmen.

### Weiterer Betrieb

Die Überwachung der Gesamthärte des Rohwassers im weiteren Betrieb der Wasserbehandlungsanlage übernimmt dann der Leitfähigkeitssensor mit der oder den korrigierten (aktualisierten) Kalibrierkennlinien.

Ein weiterer Vorteil des erfindungsgemäßen Verfahrens ist, dass der Zeitpunkt für eine Regeneration der Enthärtungsvorrichtung, zu dessen Bestimmung die Gesamthärte des Rohwassers benötigt wird, auch bei Wässern mit ungewöhnlicher Zusammensetzung exakt bestimmt werden kann. Dies spart dann einerseits Regeneriersalz und vermeidet andererseits Härtedurchbrüche.

### Bevorzugte Varianten der Erfindung

In einer bevorzugten Variante des erfindungsgemäßen Verfahrens mit Bestimmung von V_{NK} wird der Grenzwert als überschritten betrachtet, wenn die nicht-konduktometrisch bestimmte Verschnittwasserhärte V_{NK} um mehr als +2,2°dH oder-1,1°dH vom Sollwert (SW) abweicht. Dadurch können die üblicherweise geforderten Toleranzgrenzen für die Genauigkeit einer Verschnittwasser-Härteregelung eingehalten werden. Die DIN 19636-100 legt die Toleranzgrenzen für Verschnittwasser folgendermaßen fest: "Die Summe der Erdalkali-Ionen im Verschnittwasser darf bei jedem eingestellten Wert um nicht mehr als +0,4 mol/m³ und -0,2 mol/m³ von diesem abweichen". 0,4 mol/m³ Erdalkali-Ionen entsprechen einer Härte von 2,2 °dH, während 0,2 mol/m³ Erdalkali-Ionen einer Härte von 1,1 °dH entsprechen. Der Grenzwert (oder genauer, der Grenz-Wertebereich), d.h. die maximal tolerierbare Abweichung der nicht-konduktometrisch bestimmten Verschnittwasserhärte V_{NK} vom Sollwert (SW), kann je nach Anspruch an die Verschnittwasserqualität auch kleiner oder größer gewählt werden.

In einer ebenfalls bevorzugten Variante mit Bestimmung von G_{NK} wird der Grenzwert als überschritten betrachtet, wenn die nicht-konduktometrisch bestimmte Gesamthärte G_{NK} von der über die Leitfähigkeit bestimmten Gesamthärte G_{LF} um mehr als +C*2,2°dH oder-C*1,1°dH abweicht, mit C=G_{LF}/SW. Auch dadurch können die üblicherweise geforderten Toleranzgrenzen für die Genauigkeit einer Verschnittwasser-Härteregelung eingehalten werden, vgl. DIN 19636-100. Durch den Faktor C wird berücksichtigt, dass eine Abweichung in der Rohwasserhärte sich im Verschnittwasser nur entsprechend dem Anteil des Rohwassers führenden Teilstroms auswirkt. Je nach Anspruch an die Verschnittwasserqualität kann auch hier der Grenzwert bzw. Grenz-Wertebereich kleiner oder größer gewählt werden.

Bei einer vorteilhaften Variante des erfindungsgemäßen Verfahrens wird die nicht-konduktometrische Härtebestimmung des Verschnittwassers oder Rohwassers einmalig durchgeführt. Die Messung und damit Überprüfung der Verschnittwasserhärte oder Rohwasserhärte wird in dieser Variante einmalig und typischerweise bei oder unmittelbar nach Inbetriebnahme der Wasserbehandlungsanlage durchgeführt, beispielsweise mittels Titration. Dies ist mit wenig Aufwand verbunden. Die Wasserqualität in einem Versorgungsgebiet bleibt in vielen Fällen konstant. Die nicht-konduktometrisch bestimmte Verschnittwasserhärte V_{NK} oder Rohwasserhärte G_{NK} wird bevorzugt über eine Eingabevorrichtung in die elektronische Steuereinrichtung eingegeben, abgespeichert und automatisch ausgewertet.

Eine alternative, bevorzugte Variante sieht vor, dass die nicht-konduktometrische Härtebestimmung des Verschnittwassers oder Rohwassers wiederholt in zeitlichen Abständen durchgeführt wird. Die nicht-konduktometrische Härtebestimmung des Verschnittwassers oder Rohwassers wird in dieser Variante in typischerweise regelmäßigen Abständen (die bevorzugt durch Zeitablauf definiert sind, aber auch anders, etwa über eine entnommene Wassermenge, definiert sein können) durchgeführt. Ein typisches Messintervall ist einmal pro Woche. Diese Variante ist in Gebieten mit wechselnder Wasserqualität, z.B. in Gebieten mit Mischwasserversorgung, vorteilhaft. Sofern erforderlich ist eine Hinterlegung entsprechender Kalibrierkennlinien für jede auftretende Wasserqualität möglich.

Bei einer bevorzugten Variante ist vorgesehen, dass die elektronische Steuereinrichtung nach einer Änderung einer oder mehrerer Kalibrierkennlinien auf eine oder mehrere Standard-Kalibrierkennlinien zurückgreift, wenn der Leitfähigkeitssensor eine Änderung der Leitfähigkeit des Roh-, Weich oder Verschnittwassers registriert, die einen Schwellbetrag überschreitet. Die korrigierten (abgeänderten) Kalibrierkennlinien sind individuell an das örtlich vorliegende Wasser angepasst, das eine außergewöhnliche Zusammensetzung aufweist. Für andere Wässer ist jedoch die Verwendung von nicht korrigierten Standard-Kalibrierkennlinien genauer, die den gemittelten Eigenschaften einer Vielzahl von Wasserzusammensetzungen entsprechen. Die Umstellung auf die nicht korrigierten (ursprünglichen) Standard-Kalibrierkennlinien erfolgt, wenn sich die Leitfähigkeit des Roh-, Weich- oder Verschnittwassers um einen bestimmten Schwellbetrag ändert, z.B. um mehr als 50 µS/cm.

In einer Weiterentwicklung dieser Variante wird eine Alarmmeldung ausgelöst, wenn der Leitfähigkeitssensor eine Änderung der Leitfähigkeit des Roh-, Weich- oder Verschnittwassers registriert, die den Schwellbetrag überschreitet. Zur Alarmmeldung kann ein optisches und/oder akustisches Signal, ein Funksignal oder ein elektrisches Signal beispielsweise an eine Leitwarte eines Gebäudes verwendet werden. Die Verschnittwasserhärte oder Rohwasserhärte können dann erneut nicht-konduktometrisch bestimmt werden, und gegebenenfalls können die eine oder mehreren Kalibrierkennlinien korrigiert werden.

Bevorzugt ist auch eine Verfahrensvariante, die vorsieht, dass die elektronische Steuereinrichtung eine oder mehrere aktuell nicht mehr verwendete Kalibrierkennlinien erneut zur Bestimmung der Gesamthärte G_{LF} des Rohwassers heranzieht, sobald der Leitfähigkeitsensor im Roh-, Weich- oder Verschnittwasserbereich eine Leitfähigkeit registriert, bei der zu einem früheren Zeitpunkt eine Abänderung der einen oder der mehreren Kalibrierkennlinien auf die eine oder die mehreren aktuell nicht mehr verwendeten Kalibrierkennlinien durchgeführt wurde. Die Wasserbehandlungsanlage erkennt selbstständig, wenn ein Wasser enthärtet wird, für das zu einem früheren Zeitpunkt bereits eine bestimmte Korrektur der Verschneidung notwendig war, und wechselt zu dieser über. Dadurch wird die Verschnittwasserhärte permanent optimal gesteuert. Diese Variante kommt vor allem dann in Betracht, wenn sich in einem Versorgungsnetz einige wenige Rohwasserzusammensetzungen abwechseln, und die auftretenden Leitfähigkeitsbereiche (gemessen im Roh-, Weich- oder Verschnittwasser) der verschiedenen Rohwasserzusammensetzungen sich nicht überlappen. In diesem Fall kann aus der Zugehörigkeit der Leitfähigkeit zu einem der Bereiche auf die angemessene Kalibrierung rückgeschlossen werden.

In den Rahmen der vorliegenden Erfindung fällt auch eine Wasserbehandlungsanlage, mit
- einer Enthärtungsvorrichtung, insbesondere umfassend ein lonentauscherharz,
- einem Leitfähigkeitssensor,
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- einer elektronischen Steuereinrichtung, mittels der aus einer mittels des Leitfähigkeitssensors gemessenen elektrischen Leitfähigkeit des Roh-, Weich- oder Verschnittwassers und mit einer oder mehreren in der elektronischen Steuereinrichtung hinterlegten Kalibrierkennlinien eine Gesamthärte G_{LF} des Rohwassers bestimmt werden kann,
und mittels der die Verstellposition der Verschneideeinrichtung unter Berücksichtigung der bestimmten Gesamthärte G_{LF} des Rohwassers gesteuert werden kann, so dass die Wasserhärte im Verschnittwasserstrom V(t)_{verschnitt} auf einen vorgegebenen Sollwert (SW) eingestellt wird,
dadurch gekennzeichnet,
dass die Wasserbehandlungsanlage eine Eingabevorrichtung für eine nicht-konduktometrisch bestimmte Verschnittwasserhärte V_{NK} aufweist,
und dass die Steuereinrichtung dazu eingerichtet ist, eine eingegebene, nicht-konduktometrisch bestimmte Verschnittwasserhärte V_{NK} mit dem vorgegebenen Sollwert (SW) zu vergleichen, und die eine oder mehreren Kalibrierkennlinien so abzuändern, dass sich aus der gemessenen elektrischen Leitfähigkeit des Roh-, Weich- oder Verschnittwassers mit der einen oder den mehreren, abgeänderten Kalibrierkennlinien eine Verschnittwasserhärte V_{LF} ergibt, die der nicht-konduktometrisch bestimmten Verschnittwasserhärte V_{NK} entspricht. Die Wasserbehandlungsanlage gestattet eine Anpassung der Verschneidung an die lokalen Wasserverhältnisse und damit eine sehr genaue, aber kostengünstige Einstellung der Verschnittwasserhärte. Die Änderung der einen oder der mehreren Kalibrierkennlinien kann auf den Fall beschränkt werden, dass die Abweichung von V_{NK} zu SW einen Grenzwert oder Grenz-Wertebereich überschreitet.

Ebenfalls in den Rahmen der vorliegenden Erfindung fällt eine Wasserbehandlungsanlage, mit
- einer Enthärtungsvorrichtung, insbesondere umfassend ein lonentauscherharz,
- einem Leitfähigkeitssensor,
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- einer elektronischen Steuereinrichtung, mittels der aus einer mittels des Leitfähigkeitssensors gemessenen elektrischen Leitfähigkeit des Roh-, Weich- oder Verschnittwassers und mit einer oder mehreren in der elektronischen Steuereinrichtung hinterlegten Kalibrierkennlinien eine Gesamthärte G_{LF} des Rohwassers bestimmt werden kann,
und mittels der die Verstellposition der Verschneideeinrichtung unter Berücksichtigung der bestimmten Gesamthärte G_{LF} des Rohwassers gesteuert werden kann, so dass die Wasserhärte im Verschnittwasserstrom V(t)_{verschnitt} auf einen vorgegebenen Sollwert (SW) eingestellt wird,
dadurch gekennzeichnet,
dass die Wasserbehandlungsanlage eine Eingabevorrichtung für eine nicht-konduktometrisch bestimmte Gesamthärte G_{NK} des Rohwassers aufweist, und dass die Steuereinrichtung dazu eingerichtet ist, eine eingegebene, nicht-konduktometrisch bestimmte Gesamthärte G_{NK} des Rohwassers mit der über die Leitfähigkeit bestimmten Gesamthärte G_{LF} des Rohwassers zu vergleichen, und die eine oder mehreren Kalibrierkennlinien so abzuändern, dass sich aus der gemessenen elektrischen Leitfähigkeit des Roh-, Weich- oder Verschnittwassers mit der einen oder den mehreren, abgeänderten Kalibrierkennlinien eine Gesamthärte G_{LF} des Rohwassers ergibt, die der nicht-konduktometrisch bestimmten Gesamthärte G_{NK} des Rohwassers entspricht. Auch diese Wasserbehandlungsanlage gestattet eine Anpassung der Verschneidung an die lokalen Wasserverhältnisse und damit eine sehr genaue, aber kostengünstige Einstellung der Verschnittwasserhärte. Die Änderung der einen oder der mehreren Kalibrierkennlinien kann auf den Fall beschränkt werden, dass die Abweichung von G_{NK} zu G_{LF} (vor der Änderung) einen Grenzwert oder einen Grenz-Wertebereich überschreitet.

Die vorgestellten erfindungsgemäßen Wasserbehandlungsanlagen können mit einem oben beschriebenen, erfindungsgemäßen Verfahren betrieben werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1:: ein Ablaufdiagramm eines erfindungsgemäßen Verfahrens, basierend auf einer nicht-konduktometrischen Messung der Verschnittwasserhärte V_{NK};
- Fig. 2: eine Kalibrierkennlinie, die im Rahmen der Erfindung korrigiert werden kann;
- Fig. 3: eine schematische Darstellung einer erfindungsgemäßen Wasserbehandlungsanlage zur Ausführung des erfindungsgemäßen Verfahrens.

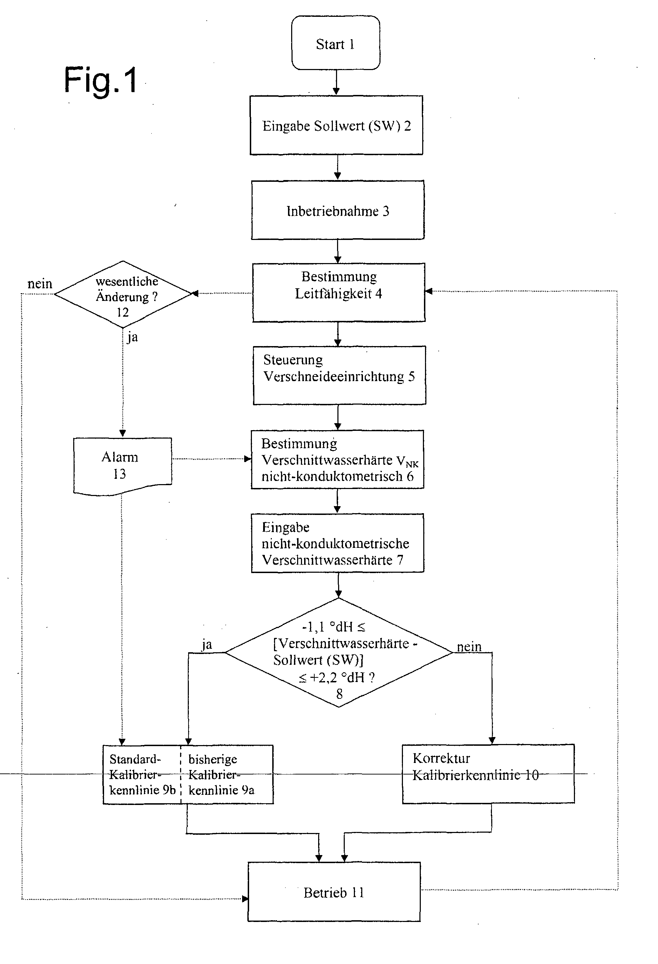

Die Fig. 1 illustriert anhand eines Ausführungsbeispiels den Ablauf eines erfindungsgemäßen Betriebsverfahrens für eine Wasserbehandlungsanlage.

Zu Beginn ("Start" 1) des Betriebes der Wasserbehandlungsanlage wird die gewünschte Wasserhärte als Sollwert (SW) vorgeben und mittels einer Eingabevorrichtung in einer elektronischen Steuereinrichtung abgespeichert ("Eingabe Sollwert (SW)" 2). Der Sollwert (SW) liegt abhängig von den Anforderungen vor Ort üblicherweise im Bereich zwischen 0°dH und 10°dH (°dH=Grad deutscher Härte).

Die Wasserbehandlungsanlage wird an ein Wassernetz angeschlossen und vom Wasser durchströmt ("Inbetriebnahme" 3). Das Wasser wird dabei enthärtet, indem die im Wasser enthaltenen Härtebildner (Calcium- und Magnesium-lonen) in einem lonentauscherharz gegen Natrium-Ionen ausgetauscht werden.

Um Wasser mit einer dem Sollwert (SW) entsprechenden Wasserhärte zu erhalten, ist eine Verschneideeinrichtung zum Mischen von enthärtetem Wasser (Weichwasser) und Rohwasser notwendig. Zur Steuerung der Verschneideeinrichtung (5) muss die Rohwasserhärte bekannt sein. Hierzu wird die Leitfähigkeit beispielsweise im Rohwasser experimentell bestimmt ("Bestimmung Leitfähigkeit" 4) und daraus mittels einer Kalibrierkennlinie die Rohwasserhärte (Gesamthärte des Rohwassers) G_{LF} abgeleitet. Die Kalibrierkennlinie berücksichtigt, dass die Leitfähigkeit näherungsweise proportional zur Wasserhärte ist. Prinzipiell kann die Leitfähigkeit auch im Weichwasser- oder Verschnittwasserbereich gemessen werden. In diesem Fall muss bei der Ableitung der Rohwasserhärte aus der gemessenen Leitfähigkeit berücksichtigt werden, das sich die Leitfähigkeit beim Austausch der Härtebildner gegen Natrium-Ionen spezifisch ändert; bei Messung im Verschnittwasserbereich müssen zusätzlich die Anteile von Roh- und Weichwasser berücksichtigt werden.

Die elektronische Steuereinrichtung steuert die Verstellposition der Verschneideeinrichtung ("Steuerung der Verschneideeinrichtung" 5), typischerweise eines Verschneideventils, unter Berücksichtigung der aus der Leitfähigkeit abgeleiteten Gesamthärte G_{LF} des Rohwassers, so dass die Wasserhärte im Verschnittwasserstrom V(t)_{verschnitt} auf den vorgegebenen Sollwert (SW) eingestellt wird.

Zur Kontrolle der Steuerung der Verschneideeinrichtung (5) wird die Wasserhärte V_{NK} des Verschnittwassers nicht-konduktometrisch bestimmt (6), beispielsweise durch Titration oder mit einer ionensensitiven Elektrode. Bei diesen Bestimmungsmethoden werden die Härtebildner Calcium- und Magnesium-lonen direkt erfasst, ein etwaiger schwankender Gehalt an Natrium-Ionen beeinflusst die Härtebestimmung in diesem Fall nicht.

Die nicht-konduktometrisch bestimmte Verschnittwasserhärte V_{NK} wird mit einem geeigneten Eingabemittel (etwa einer Tastatur) in die elektronische Steuereinrichtung eingegeben (7) und dort mit dem Sollwert (SW) verglichen (8). Die DIN 19636-100 legt die Toleranzgrenzen für Verschnittwasser folgendermaßen fest: "Die Summe der Erdalkali-Ionen im Verschnittwasser darf bei jedem eingestellten Wert um nicht mehr als +0,4 mol/m³ und -0,2 mol/m³ von diesem abweichen". 0,4 mol//m³ Erdalkali-lonen entsprechen einer Härte von 2,2 °dH, während 0,2 mol/m³ Erdalkali-Ionen einer Härte von 1,1 °dH entsprechen.

Falls die nicht-konduktometrisch bestimmte Verschnittwasserhärte V_{NK} um weniger als ein vorgegebener Grenzwert bzw. ein vorgegebenes Grenzintervall (hier: +2,2°dH oder -1,1°dH) vom Sollwert (SW) abweicht, greift die elektronische Steuereinrichtung zur Bestimmung der Wasserhärte aus der gemessenen Leitfähigkeit in Zukunft weiter auf die bisher gültige Kalibrierkennlinie (9a) zurück; bei der ersten Inbetriebnahme ist dies eine in der Steuereinrichtung abgespeicherte Standard-Kalibrierkennlinie (9b). Die Steuerung der Verschneideeinrichtung unter Verwendung der bisherigen Kalibrierkennlinie (9a) ergibt eine tatsächliche Verschnittwasserhärte, deren Abweichtung vom Sollwert (SW) innerhalb der vorgegebenen Toleranzen liegt.

Falls die nicht-konduktometrisch bestimmte Verschnittwasserhärte V_{NK} um mehr als +2,2°dH oder -1,1 °dH vom Sollwert (SW) abweicht, berechnet die elektronische Steuereinrichtung aus der Abweichung eine neue Kalibrierkennlinie, die der Zusammensetzung des vorliegenden Wassers angepasst ist ("Korrektur Kalibrierkennlinie" 10). Die Überwachung der Gesamthärte des Rohwassers im weiteren Betrieb (11) der Wasserbehandlungsanlage übernimmt dann der Leitfähigkeitssensor mit der korrigierten Kalibrierkennlinie.

Während des Betriebes (11) der Wasserbehandlungsanlage wird die Leitfähigkeit des Rohwassers (oder des Weich- bzw. Verschnittwassers) permanent überwacht (4). Verändert sich die Leitfähigkeit - und damit typischerweise auch die Härte G_{LF} des Rohwassers -, so wird entsprechend die Verschneideeinrichtung nachgeregelt. Ändert sich die Leitfähigkeit wesentlich (12), d.h. um mehr als einen vorgegebenen Schwellwert (beispielsweise um mehr als 50 µS/cm), so wird ein Alarm (13) ausgelöst. Zur Alarmmeldung kann ein optisches und/oder akustisches Signal, ein Funksignal oder ein elektrisches Signal beispielsweise an eine Leitwarte eines Gebäudes verwendet werden. Die Verschnittwasserhärte kann dann erneut nicht-konduktometrisch bestimmt (6) und gegebenenfalls die Kalibrierkennlinie erneut korrigiert werden (10). Alternativ oder zusätzlich (insbesondere bis die erneute nicht-konduktometrische Verschnittwasserhärte-Bestimmung und Kalibrierungskorrektur erfolgt ist) kann wieder auf die hinterlegte Standard-Kalibrierkennlinie (9a) zurückgegriffen werden; die Standard-Kalibrierkennlinie (9a) erzeugt im Allgemeinen einen kleineren Fehler bei der Einstellung der Verschnittwasserhärte als eine veraltete, an ein Wasser mit ungewöhnlicher Zusammensetzung individuell angepasste Kalibrierkennlinie.

Die Korrektur der Kalibrierkennlinien kann anstelle von der nichtkonduktometrisch bestimmten Verschnittwasserhärte V_{NK} (6) und deren Eingabe (7) auch auf der nicht-konduktometrisch bestimmten Gesamthärte G_{NK} des Rohwassers und deren Eingabe in die Steuereinrichtung beruhen.

Im Folgenden soll kurz die Korrektur einer Kalibrierkennlinie im Rahmen der Erfindung beispielhaft erläutert werden.

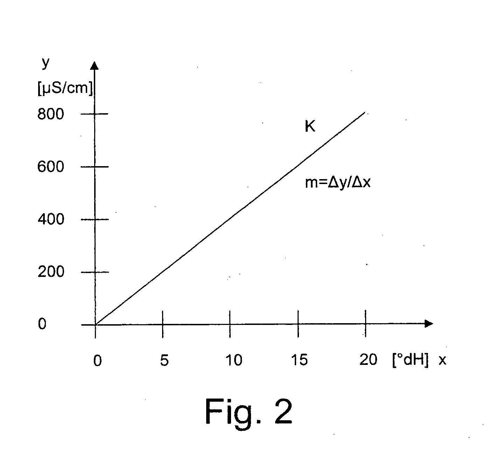

In der Steuereinrichtung einer erfindungsgemäß betriebenen Wasserbehandlungsanlage ist derzeit eine Kalibrierkennlinie K hinterlegt, mit der die Steuerung der Verschneidung erfolgt. Die **Fig. 2** zeigt diese Kalibrierkennlinie K; nach rechts (x-Richtung) ist die Gesamthärte des Wassers (in °dH) aufgetragen, und nach oben (y-Richtung) die Leitfähigkeit des Wassers (in µS/cm). Die Kalibrierkennlinie K ist eine Ursprungsgerade mit einer Steigung m=Δy/Δx von hier 40 µS/(cm °dH); mit dem Steigungsparameter m kann die Kalibrierkennlinie K vollständig beschrieben werden.

Mit der Kalibrierkennlinie K kann aus einer gemessenen Rohwasserleitfähigkeit LFᵣₒₕ die Gesamthärte G_{LF} des Rohwassers berechnet werden gemäß G_{LF}= LFᵣₒₕ / m. Die Härte des Verschnittwassers V_{LF} ergibt sich dann durch die Formel V_{LF}=nᵣₒₕ * LFᵣₒₕ * 1/m, mit nᵣₒₕ: Anteil des Rohwassers am Verschnittwasser. Die Größe nᵣₒₕ kann über direkte oder indirekte Bestimmung der Teilströme von Weich- und Rohwasser mit Durchflussmessgeräten ermittelt werden, oder aus einer bekannten Verstellposition der Verschneideeinrichtung geschätzt werden.

Zur Steuerung der Verschneideeinrichtung wird die obige Formel nach nᵣₒₕ aufgelöst verwendet, wobei die Verschnittwasserhärte V_{LF} durch einen vorgegebenen Sollwert SW der Verschnittwasserhärte ersetzt ist: nᵣₒₕ= SW * m * 1/LFᵣₒₕ. Wird beispielsweise bei einem Sollwert SW von 10°dH und einer Kalibrierkennlinie mit Steigung m=40 µS/(cm °dH) eine Leitfähigkeit LFᵣₒₕ von 600 µS/cm im Rohwasser gemessen, so ergibt sich nᵣₒₕ zu 0,67, d.h. es müssen 67% Rohwasser mit 33% Weichwasser (der Härte 0°dH) gemischt werden, und die Verschneideeinrichtung wird von der elektronischen Steuereinrichtung automatisch entsprechend eingestellt.

Nun erfolgt (bei den Einstellungen und Messwerten aus diesem Beispiel) eine nicht-konduktometrische Kontrollmessung der Verschnittwasserhärte (etwa durch Titration), die eine Verschnittwasserhärte V_{NK} von nur 8°dH (statt dem Sollwert SW von 10°dH) ergibt. Offensichtlich ist das Rohwasser weicher als angenommen, und der Rohwasseranteil im Verschnittwasser ist derzeit zu niedrig, um den Sollwert SW einzuhalten. Da die Verschnittwasserhärte V_{NK} um mehr als 1,1 °dH zu niedrig ist verglichen mit dem Sollwert SW, sollte eine Korrektur der Kalibrierkennlinie, d.h. des Steigungs-Parameters m, stattfinden, um die Bedingungen der DIN-Norm 19636-100 einzuhalten.

Der Formelzusammenhang V_{NK}=nᵣₒₕ * LFᵣₒₕ * 1/mₙₑᵤ, mₙₑᵤ: gesuchte korrigierte Steigung der Kalibrierkennlinie, kann nach mₙₑᵤ aufgelöst werden mit dem Ergebnis
mₙₑᵤ= nroh *LFᵣₒₕ * 1/V_{NK}. Diese Formel für mₙₑᵤ ist in der Steuereinrichtung hinterlegt, und nach Eingabe von V_{NK} in die Steuereinrichtung kann mₙₑᵤ automatisch bestimmt und ab dann verwendet werden. Im Beispiel ergibt sich mit den in der Steuereinrichtung bekannten Parametern zur Zeit der Wasserentnahme nᵣₒₕ = 0,67 und LFᵣₒₕ=600 µS/cm und V_{NK}=8°dH ein Wert mₙₑᵤ von 50,25 µS/(cm °dH). Berechnet man mit dieser korrigierten Steigung mₙₑᵤ die Verschnittwasserhärte V_{LF} mit den bisherigen Einstellungen (also nᵣₒₕ=0,67 und LFᵣₒₕ=600µS/cm) gemäß V_{LF}=nᵣₒₕ * LFᵣₒₕ * 1/mₙₑᵤ erneut, so ergibt sich V_{LF} zu 8°dH, also zu V_{NK}.

Mit der neuen Steigung mₙₑᵤ der Kalibrierkennlinie wird dann zur Steuerung der Verstellposition der Verschneideeinrichtung bei der gemessenen Leitfähigkeit im Rohwasser nunmehr ein Rohwasseranteil nᵣₒₕ ermittelt gemäß nᵣₒₕ=SW*mₙₑᵤ*1/LFᵣₒₕ um den Sollwert SW zu erreichen; bei SW=10°dH, mₙₑᵤ von 50,25 µS/(cm °dH) und LFᵣₒₕ von 600 µS/cm ergibt sich nᵣₒₕ nunmehr zu 0,84, d.h. es müssen 84% Rohwasser und 16% Weichwasser gemischt werden, um die gewünschte Sollwasserhärte SW von 10°dH tatsächlich zu erreichen. Die Steuereinrichtung wird die Verstellposition der Verschneideeinrichtung entsprechend einstellen.

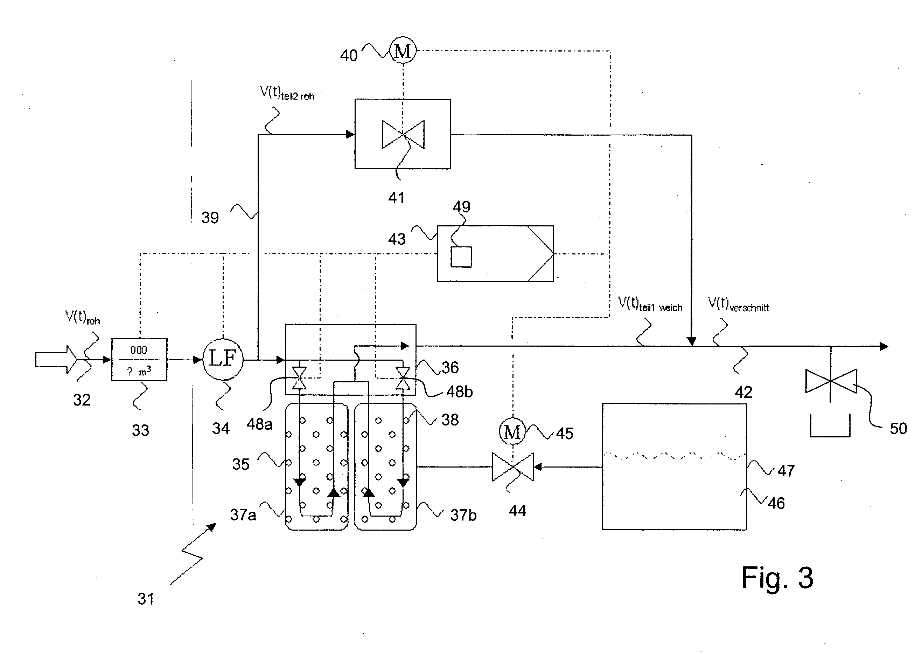

Die **Fig. 3** zeigt schematisch und beispielhaft eine Ausführungsform einer erfindungsgemäßen Wasserbehandlungsanlage, auf der das erfindungsgemäße Betriebsverfahren ablaufen kann.

Die Wasserenthärtungsanlage 31 ist über einen Zulauf 32 an ein lokales Wasserversorgungssystem, etwa das Trinkwassernetz, angeschlossen. Der am Zulauf 32 fließende (gesamte) Rohwasserstrom V(t)ᵣₒₕ passiert zunächst einen Durchflussmesser 33 und anschließend einen Leitfähigkeitssensor 34, mit dem über die Leitfähigkeit LFᵣₒₕ des Rohwassers die momentane Wasserhärte WHᵣₒₕ^{mom} des Rohwassers, auch genannt Gesamthärte G_{LF} des Rohwassers, bestimmt wird. Die Umrechnung der Leitfähigkeit LFᵣₒₕ in die Härte G_{LF} erfolgt anhand einer Kalibrierkennlinie, die in einer Steuereinrichtung 43 hinterlegt ist.

Ein erster Teil (Teilstrom V(t)_{teil1weich}) des (gesamten) Rohwasserstroms V(t)ᵣₒₕ fließt einer Enthärtungsvorrichtung 35 zu, welche insbesondere einen Steuerkopf 36 sowie zwei (hier gleichartige) Behälter (Tanks) 37a, 37b mit lonentauscherharz 38 aufweist. Ein zweiter Teil (Teilstrom V(t)ₜₑᵢₗ₂ᵣₒₕ) fließt in eine Bypassleitung 39 ein.

Das in die Enthärtungsvorrichtung 35 einfließende Rohwasser durchströmt im Normalbetrieb parallel die beiden Behälter 37a, 37b mit lonentauscherharz 8, wobei dieses vollständig enthärtet wird. Durch die parallele Durchströmung der Behälter 37a, 37b vergrößert sich der Nenndurchfluss der Anlage 31 verglichen mit einer Durchströmung nur eines einzigen Behälters.

Der zweite Teil des Rohwassers V(t)ₜₑᵢₗ₂ᵣₒₕ in der Bypassleitung 39 passiert eine automatisch betätigbare Verschneideeinrichtung, hier ausgebildet mit einem mittels eines Stellmotors 40 verstellbaren Verschneideventils 41.

Der erste Teilstrom V(t)_{teil1weich} und der zweite Teilstrom V(t)ₜₑᵢₗ₂ᵣₒₕ werden schließlich zu einem Verschnittwasserstrom V(t)_{verschnitt} vereint, welcher einem Ablauf 42 zufließt. Der Ablauf 42 ist an eine nachfolgende Wasserinstallation, etwa die Frischwasserleitungen eines Gebäudes, angeschlossen. Im Ablauf 42 ist außerdem ein Zapfhahn 50 für Kontrollentnahmen von Verschnittwasser vorgesehen.

Die Messergebnisse des Leitfähigkeitssensors 34 und des Durchflussmessers 33 werden an die elektronische Steuereinrichtung 43 übertragen. In der Steuereinrichtung 43 ist ein gewünschter Sollwert (SW) der Wasserhärte des Verschnittwassers hinterlegt. Aus dem Sollwert (SW) der Verschnittwasserhärte und der momentanen Rohwasserhärte G_{LF}, welche aus der Leitfähigkeit LFᵣₒₕ gemessen am Sensor 34 und der Kalibrierkennlinie bestimmt wird, ermittelt die Steuereinrichtung 43 ein momentanes Soll-Verhältnis der Teilströme V(t)_{teil1weich} und V(t)ₜₑᵢₗ₂ᵣₒₕ, durch welches sich die gewünschte Wasserhärte im Verschnittwasser ergibt. Die Anteile der beiden Teilströme V(t)_{teil1weich} und V(t)ₜₑᵢₗ₂ᵣₒₕ werden über die Einstellung der Verschneideeinrichtung festgelegt. Hierzu sind die sich bei verschiedenen Einstellungen der Verschneideeinrichtung ergebenden Anteile der Teilströme in der elektronischen Steuereinrichtung 43 hinterlegt.

Die elektronische Steuereinrichtung 43 überwacht auch den Erschöpfungszustand des lonentauscherharzes 38 in den beiden Behältern 37a, 37b. Bei Wasserentnahmen wird dabei die entnommene Wassermenge jeweils mit der zugehörigen momentanen Rohwasserhärte gewichtet und von der aktuellen Restkapazität abgezogen. Bei Erschöpfung eines Behälters 37a, 37b wird dieser durch Schließen eines Einlassventil 48a, 48b vom Wassernetz getrennt und einer Regeneration unterzogen. Hierfür wird ein Regenerationsventil 44 mit einem Stellmotor 45 durch die elektronische Steuereinrichtung 43 automatisch betätigt, wodurch Regeneriermittellösung (bevorzugt Salzsole) 46 aus einem Vorratsgefäß 47 durch den erschöpften Behälter 37a, 37b strömt.

Zur Kontrolle und Korrektur der Kalibrierkennlinie der Verschneidungssteuerung in der Steuereinrichtung 43 kann vom Ablauf 42 am Zapfhahn 50 eine Wasserprobe entnommen werden und mit einem handelsüblichen Titrierbesteck die Wasserhärte V_{NK} im Verschnittwasser bestimmt werden. Die bestimmte Härte V_{NK} kann dann an einer Eingabevorrichtung 49 in die Steuereinrichtung 43 eingegeben werden. Falls V_{NK} mehr als 2,2 °dH über dem Sollwert SW oder mehr als 1,1°dH unter dem Sollwert SW liegt, korrigiert die Steuereinrichtung 43 automatisch die Kalibrierkennlinie (vgl. hierzu die Erläuterungen zu Fig. 2).

## Patentansprüche

1. Verfahren zum Betrieb einer Wasserbehandlungsanlage (31) mit
- einer Enthärtungsvorrichtung (35), insbesondere umfassend ein lonentauscherharz (38),
- einem Leitfähigkeitssensor (34),
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
wobei das Verfahren folgende Schritte aufweist:
- Bestimmung der elektrischen Leitfähigkeit (4) des Roh-, Weich- oder Verschnittwassers mittels des Leitfähigkeitssensors (34) und daraus Bestimmung der Gesamthärte G_{LF} des Rohwassers mit einer oder mehreren in einer elektronischen Steuereinrichtung (43) hinterlegten Kalibrierkennlinien (K),
- Steuerung der Verstellposition der Verschneideeinrichtung (5) mittels der elektronischen Steuereinrichtung (43) unter Berücksichtigung der bestimmten Gesamthärte G_{LF} des Rohwassers, so dass die Wasserhärte im Verschnittwasserstrom V(t)_{verschnitt} auf einen vorgegebenen Sollwert (SW) eingestellt wird,
**dadurch gekennzeichnet,**
**dass** eine Verschnittwasserhärte V_{NK} nicht-konduktometrisch bestimmt (6) und mit dem Sollwert (SW) verglichen wird (8),
und **dass** eine oder mehrere Kalibrierkennlinien (K) zur Bestimmung der Gesamthärte G_{LF} des Rohwassers abgeändert werden (10), wenn die Abweichung der nicht-konduktometrisch bestimmten Verschnittwasserhärte V_{NK} vom Sollwert (SW) einen Grenzwert überschreitet, wobei die eine oder mehreren Kalibrierkennlinien (K) so abgeändert werden, dass sich aus der gemessenen elektrischen Leitfähigkeit des Roh-, Weich- oder Verschnittwassers mit der einen oder den mehreren, abgeänderten Kalibrierkennlinien eine Verschnittwasserhärte V_{LF} ergibt, die der nicht-konduktometrisch bestimmten Verschnittwasserhärte V_{NK} entspricht.

2. Verfahren zum Betrieb einer Wasserbehandlungsanlage (31) mit
- einer Enthärtungsvorrichtung (35), insbesondere umfassend ein lonentauscherharz (38),
- einem Leitfähigkeitssensor (34),
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
wobei das Verfahren folgende Schritte aufweist:
- Bestimmung der elektrischen Leitfähigkeit (4) des Roh-, Weich- oder Verschnittwassers mittels des Leitfähigkeitssensors (34) und daraus Bestimmung der Gesamthärte G_{LF} des Rohwassers mit einer oder mehreren in einer elektronischen Steuereinrichtung (43) hinterlegten Kalibrierkennlinien (K),
- Steuerung der Verstellposition der Verschneideeinrichtung (5) mittels der elektronischen Steuereinrichtung (43) unter Berücksichtigung der bestimmten Gesamthärte G_{LF} des Rohwassers, so dass die Wasserhärte im Verschnittwasserstrom V(t)_{verschnitt} auf einen vorgegebenen Sollwert (SW) eingestellt wird,
**dadurch gekennzeichnet,**
**dass** eine Gesamthärte G_{NK} des Rohwassers nicht-konduktometrisch bestimmt wird und mit der über die Leitfähigkeit bestimmten Gesamthärte G_{LF} des Rohwassers verglichen wird,
und **dass** eine oder mehrere Kalibrierkennlinien (K) zur Bestimmung der Gesamthärte G_{LF} des Rohwassers abgeändert werden (10), wenn die Abweichung der nicht-konduktometrisch bestimmten Gesamthärte G_{NK} von der über die Leitfähigkeit bestimmten Gesamthärte G_{LF} einen Grenzwert überschreitet, wobei die eine oder mehreren Kalibrierkennlinien (K) so abgeändert werden, dass sich aus der gemessenen elektrischen Leitfähigkeit des Roh-, Weich- oder Verschnittwassers mit der einen oder den mehreren, abgeänderten Kalibrierkennlinien eine Gesamthärte G_{LF} des Rohwassers ergibt, die der nicht-konduktometrisch bestimmten Gesamthärte G_{NK} des Rohwassers entspricht.

3. Verfahren nach Anspruch 1, **dadurch gekennzeichnet, dass** der Grenzwert als überschritten betrachtet wird, wenn die nicht-konduktometrisch bestimmte Verschnittwasserhärte V_{NK} um mehr als +2,2°dH oder -1,1°dH vom Sollwert (SW) abweicht.

4. Verfahren nach Anspruch 2, **dadurch gekennzeichnet, dass** der Grenzwert als überschritten betrachtet wird, wenn die nicht-konduktometrisch bestimmte Gesamthärte G_{NK} von der über die Leitfähigkeit bestimmten Gesamthärte G_{LF} um mehr als +C*2,2°dH oder -C*1,1°dH abweicht, mit C=G_{LF}/SW.

5. Verfahren nach einem der Ansprüche 1 bis 4, **dadurch gekennzeichnet, dass** die nicht-konduktometrische Härtebestimmung des Verschnittwassers oder Rohwassers einmalig durchgeführt wird.

6. Verfahren nach einem der Ansprüche 1 bis 4, **dadurch gekennzeichnet, dass** die nicht-konduktometrische Härtebestimmung des Verschnittwassers oder Rohwassers wiederholt in zeitlichen Abständen durchgeführt wird.

7. Verfahren nach einem der vorhergehenden Ansprüche, **dadurch gekennzeichnet, dass** die elektronische Steuereinrichtung (43) nach einer Änderung einer oder mehrerer Kalibrierkennlinien (K) auf eine oder mehrere Standard-Kalibrierkennlinien (9b) zurückgreift, wenn der Leitfähigkeitssensor (34) eine Änderung der Leitfähigkeit des Roh-, Weich oder Verschnittwassers registriert, die einen Schwellbetrag überschreitet (12).

8. Verfahren nach Anspruch 7, **dadurch gekennzeichnet, dass** eine Alarmmeldung ausgelöst wird (13), wenn der Leitfähigkeitssensor (34) eine Änderung der Leitfähigkeit des Roh-, Weich- oder Verschnittwassers registriert, die den Schwellbetrag überschreitet (12).

9. Verfahren nach einem der vorhergehenden Ansprüche, **dadurch gekennzeichnet, dass** die elektronische Steuereinrichtung (43) eine oder mehrere aktuell nicht mehr verwendete Kalibrierkennlinien erneut zur Bestimmung der Gesamthärte G_{LF} des Rohwassers heranzieht, sobald der Leitfähigkeitsensor (34) im Roh-, Weich- oder Verschnittwasserbereich eine Leitfähigkeit registriert, bei der zu einem früheren Zeitpunkt eine Abänderung der einen oder der mehreren Kalibrierkennlinien auf die eine oder die mehreren aktuell nicht mehr verwendeten Kalibrierkennlinien durchgeführt wurde.

10. Verfahren nach einem der vorhergehenden Ansprüche, **dadurch gekennzeichnet, dass** die Abänderung der einen oder mehreren Kalibrierkennlinien (K) dadurch erfolgt, dass bei einer durch eine Ursprungsgerade gebildeten Kalibrierkennlinie (K), welche die Rohwasserleitfähigkeit LFᵣₒₕ auf die Gesamthärte G_{LF} des Rohwassers abbildet, deren Steigung neu bestimmt wird.

11. Wasserbehandlungsanlage (31), mit
- einer Enthärtungsvorrichtung (35), insbesondere umfassend ein lonentauscherharz (38),
- einem Leitfähigkeitssensor (34),
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- einer elektronischen Steuereinrichtung (43), mittels der aus einer mittels des Leitfähigkeitssensors (34) gemessenen elektrischen Leitfähigkeit (4) des Roh-, Weich- oder Verschnittwassers und mit einer oder mehreren in der elektronischen Steuereinrichtung (43) hinterlegten Kalibrierkennlinien (K) eine Gesamthärte G_{LF} des Rohwassers bestimmt werden kann,
und mittels der die Verstellposition der Verschneideeinrichtung unter Berücksichtigung der bestimmten Gesamthärte G_{LF} des Rohwassers gesteuert werden kann (5), so dass die Wasserhärte im Verschnittwasserstrom V(t)_{verschnitt} auf einen vorgegebenen Sollwert (SW) eingestellt wird,
**dadurch gekennzeichnet,**
**dass** die Wasserbehandlungsanlage (31) eine Eingabevorrichtung (49) für eine nicht-konduktometrisch bestimmte Verschnittwasserhärte V_{NK} aufweist,
und **dass** die Steuereinrichtung (43) dazu eingerichtet ist, eine eingegebene, nicht-konduktometrisch bestimmte Verschnittwasserhärte V_{NK} mit dem vorgegebenen Sollwert (SW) zu vergleichen (8), und die eine oder mehreren Kalibrierkennlinien (K) automatisch so abzuändern (10), dass sich aus der gemessenen elektrischen Leitfähigkeit des Roh-, Weich- oder Verschnittwassers mit der einen oder den mehreren, abgeänderten Kalibrierkennlinien eine Verschnittwasserhärte V_{LF} ergibt, die der nicht-konduktometrisch bestimmten Verschnittwasserhärte V_{NK} entspricht.

12. Wasserbehandlungsanlage (31), mit
- einer Enthärtungsvorrichtung (35), insbesondere umfassend ein lonentauscherharz (38),
- einem Leitfähigkeitssensor (34),
- einer automatisch verstellbaren Verschneideeinrichtung zum Mischen eines Verschnittwasserstromes V(t)_{verschnitt} aus einem ersten, enthärteten Teilstrom V(t)_{teil1weich} und einem zweiten, rohwasserführenden Teilstrom V(t)ₜₑᵢₗ₂ᵣₒₕ,
- einer elektronischen Steuereinrichtung (43), mittels der aus einer mittels des Leitfähigkeitssensors (34) gemessenen elektrischen Leitfähigkeit (4) des Roh-, Weich- oder Verschnittwassers und mit einer oder mehreren in der elektronischen Steuereinrichtung (43) hinterlegten Kalibrierkennlinien (K) eine Gesamthärte G_{LF} des Rohwassers bestimmt werden kann,
und mittels der die Verstellposition der Verschneideeinrichtung unter Berücksichtigung der bestimmten Gesamthärte G_{LF} des Rohwassers gesteuert werden kann (5), so dass die Wasserhärte im Verschnittwasserstrom V(t)_{verschnitt} auf einen vorgegebenen Sollwert (SW) eingestellt wird,
**dadurch gekennzeichnet,**
**dass** die Wasserbehandlungsanlage (31) eine Eingabevorrichtung (49) für eine nicht-konduktometrisch bestimmte Gesamthärte G_{NK} des Rohwassers aufweist,
und **dass** die Steuereinrichtung (43) dazu eingerichtet ist, eine eingegebene, nicht-konduktometrisch bestimmte Gesamthärte G_{NK} des Rohwassers mit der über die Leitfähigkeit bestimmten Gesamthärte G_{LF} des Rohwassers zu vergleichen, und die eine oder mehreren Kalibrierkennlinien (K) automatisch so abzuändern (10), dass sich aus der gemessenen elektrischen Leitfähigkeit des Roh-, Weich- oder Verschnittwassers mit der einen oder den mehreren, abgeänderten Kalibrierkennlinien eine Gesamthärte G_{LF} des Rohwassers ergibt, die der nicht-konduktometrisch bestimmten Gesamthärte G_{NK} des Rohwassers entspricht.

13. Wasserbehandlungsanlage (31) nach einem der Ansprüche 11 oder 12, **dadurch gekennzeichnet, dass** die Steuereinrichtung (43) dazu eingerichtet ist, zur Abänderung der einen oder mehreren Kalibrierkennlinien (K) bei einer durch eine Ursprungsgerade gebildeten Kalibrierkennlinie (K), welche die Rohwasserleitfähigkeit LFᵣₒₕ auf die Gesamthärte G_{LF} des Rohwassers abbildet, deren Steigung neu zu bestimmen.

## Claims

1. Method of operating a water treatment system (31) having
- a softening device (35), in particular comprising an ion exchange resin (38),
a conductivity sensor (34),
an automatically adjustable blending device for mixing a blended water flow V(t)_{blended} comprising a first softened partial flow V(t)_{part1Soft} and a second partial flow V(t)_{part2untreated} which carries untreated water,
the method comprising the following steps:
- determining the electrical conductivity (4) of the untreated, soft or blended water by means of the conductivity sensor (34), and determining on this basis the total hardness G_{LF} of the untreated water by means of one or a plurality of calibration characteristic(s) (K) stored in an electronic control device (43),
- control of the adjustment position of the blending device (5) by means of the electronic control device (43), in doing so taking into account the determined total hardness G_{LF} of the untreated water such that the water hardness in the blended water flow V(t)_{blended} is adjusted to a predetermined desired value (SW),
**characterized in that**
a blended water hardness V_{NK} is determined non-conductometrically (6) and is compared (8) with the desired value (SW),
and one or a plurality of calibration characteristic(s) (K) for determining the total hardness G_{LF} of the untreated water is/are changed (10) when the deviation of the non-conductometrically determined blended water hardness V_{NK} from the desired value (SW) exceeds a limit value, wherein the one or the plurality of calibration characteristic(s) (K) is/are changed in such a manner that the measured electrical conductivity of the untreated, soft or blended water together with the one or the plurality of changed calibration characteristic(s) results in a blended water hardness V_{LF} which corresponds to the blended water hardness V_{NK} that was determined non-conductometrically.

2. Method of operating a water treatment system (31) having
- a softening device (35), in particular comprising an ion exchange resin (38),
a conductivity sensor (34),
an automatically adjustable blending device for mixing a blended water flow V(t)_{blended} comprising a first softened partial flow V(t)_{part1soft} and a second partial flow V(t)p_{art2untreated} which carries untreated water,
the method comprising the following steps:
- determining the electrical conductivity (4) of the untreated, soft or blended water by means of the conductivity sensor (34), and determining on this basis the total hardness G_{LF} of the untreated water by means of one or a plurality of calibration characteristic(s) (K) stored in an electronic control device (43),
- control of the adjustment position of the blending device (5) by means of the electronic control device (43), in doing so taking into account the determined total hardness G_{LF} of the untreated water such that the water hardness in the blended water flow V(t)_{blended} is adjusted to a predetermined desired value (SW),
**characterized in that**
a total hardness G_{NK} of the untreated water is determined non-conductometrically and is compared with the total hardness G_{LF} of the untreated water determined via the conductivity,
and one or a plurality of calibration characteristic(s) (K) for determining the total hardness G_{LF} of the untreated water is/are changed (10) when the deviation of the non-conductometrically determined total hardness G_{NK} from the total hardness G_{LF} determined via the conductivity exceeds a limit value, wherein the one or the plurality of calibration characteristic(s) (K) is/are changed in such a manner that the measured electrical conductivity of the untreated, soft or blended water together with the one or the plurality of changed calibration characteristic(s) results in a total hardness G_{LF} of the untreated water which corresponds to the total hardness G_{NK} of the untreated water that was determined non-conducto-metrically.

3. Method according to claim 1, **characterized in that** the limit value is regarded as being exceeded when the non-conductometrically determined blended water hardness V_{NK} differs from the desired value (SW) by more than +2.2°dH or -1.1°dH.

4. Method according to claim 2, **characterized in that** the limit value is regarded as being exceeded when the non-conductometrically determined total hardness G_{NK} differs from the total hardness G_{LF} determined via the conductivity by more than +C*2.2°dH or - C*1.1°dH, with C=G_{LF}/SW.

5. Method according to any one of the claims 1 through 4, **characterized in that** non-conductometrical determination of the hardness of the blended water or untreated water is performed once.

6. Method according to any one of the claims 1 through 4, **characterized in that** the non-conductometrical determination of the hardness of the blended water or untreated water is repeated in time intervals.

7. Method according to any one of the preceding claims, **characterized in that** after a change of one or a plurality of calibration characteristic(s) (K), the electronic control device (43) resorts to one or a plurality of standard calibration characteristic(s) (9b) when the conductivity sensor (34) registers a change in conductivity of the untreated, soft or blended water which exceeds a threshold value (12).

8. Method according to claim 7, **characterized in that** a warning signal is triggered (13) when the conductivity sensor (34) registers a change in conductivity of the untreated, soft or blended water which exceeds the threshold value (12).

9. Method according to any one of the preceding claims, **characterized in that** the electronic control device (43) utilizes anew one or a plurality of calibration characteristic(s)s, which are currently no longer used, for determining the total hardness G_{LF} of the untreated water as soon as the conductivity sensor (34) registers a conductivity in the untreated, soft or blended water area, at which conductivity, at an earlier point in time, the one or the plurality of calibration characteristic(s) was/were changed into the one or the plurality of currently no longer used calibration characteristic(s).

10. Method according to any one of the preceding claims, **characterized in that** the one or the plurality of calibration characteristic(s) (K) is/are changed by redetermination of the gradient of a calibration characteristic (K) designed as a line through origin, which maps the untreated water conductivity LF_{untreated} onto the total hardness G_{LF} of the untreated water.

11. Water treatment system (31) having
- a softening device (35), in particular comprising an ion exchange resin (38),
a conductivity sensor (34),
an automatically adjustable blending device for mixing a blended water flow V(t)_{blended} comprising a first softened partial flow V(t)_{part1soft} and a second partial flow V(t)_{part2untreated} which carries untreated water,
- an electronic control device (43) by means of which a total hardness G_{LF} of the untreated water can be determined from an electrical conductivity (4) of the untreated, soft or blended water measured by means of the conductivity sensor (34) and one or a plurality of calibration characteristic(s) (K) stored in the electronic control device (43),
and by means of which the adjustment position of the blending device can be controlled (5) taking into account the determined total hardness G_{LF} of the untreated water, such that the water hardness in the blended water flow V(t)_{blended} is adjusted to a predetermined desired value (SW), **characterized in that**
the water treatment system (31) comprises an input device (49) for a non-conductometrically determined blended water hardness V_{NK},
and the control device (43) is designed to compare (8) an input, non-conductometrically determined blended water hardness V_{NK} with the predetermined desired value (SW), and to automatically change the one or the plurality of calibration characteristic(s) (K) (10) such that the measured electrical conductivity of the untreated, soft or blended water together with the one or the plurality of changed calibration characteristic(s) results in a blended water hardness V_{LF} which corresponds to the blended water hardness V_{NK} that was determined non-conductometrically.

12. Water treatment system (31) having
- a softening device (35), in particular comprising an ion exchange resin (38),
a conductivity sensor (34),
an automatically adjustable blending device for mixing a blended water flow V(t)_{blended} comprising a first softened partial flow V(t)_{part1soft} and a second partial flow V(t)_{part2untreated} which carries untreated water,
- an electronic control device (43) by means of which a total hardness G_{LF} of the untreated water can be determined from an electrical conductivity (4) of the untreated, soft or blended water measured by means of the conductivity sensor (34) and one or a plurality of calibration characteristic(s) (K) stored in the electronic control device (43),
and by means of which the adjustment position of the blending device can be controlled (5) taking into account the determined total hardness G_{LF} of the untreated water, such that the water hardness in the blended water flow V(t)_{blended} is adjusted to a predetermined desired value (SW), **characterized in that**
the water treatment system (31) comprises an input device (49) for a non-conductometrically determined total hardness G_{NK} of the blended water,
and the control device (43) is designed to compare an input, non-conductometrically determined total hardness G_{NK} of the untreated water with the total hardness G_{LF} of the untreated water determined via the conductivity, and to automatically change the one or the plurality of calibration characteristic(s) (K) (10) such that the measured electrical conductivity of the untreated, soft or blended water together with the one or the plurality of changed calibration characteristic(s) results in a total hardness G_{LF} of the untreated water which corresponds to the total hardness G_{NK} of the untreated water that was determined non-conductometrically.

13. Water treatment system (31) according to any one of the claims 11 or 12, **characterized in that** the control device (43) is designed to redetermine the gradient of a calibration characteristic (K) designed as a line through origin, which maps the untreated water conductivity LF_{untreated} onto the total hardness G_{LF} of the untreated water, in order to change the one or the plurality of calibration characteristic(s) (K).

## Revendications

1. Procédé de fonctionnement d'une installation de traitement d'eau (31) comprenant
- un dispositif d'adoucissement (35) comprenant en particulier une résine échangeuse d'ions (38),
- un capteur de conductivité (34),
- un dispositif de mitigeage à réglage automatique pour mélanger un courant d'eau mitigée V(t)_{verschnitt} formé d'un premier courant partiel d'eau adoucie V(t)_{teil1weich} et d'un deuxième courant partiel d'eau brute V(t)_{teil2roh,}
lequel procédé présente les étapes suivantes :
- détermination de la conductivité électrique (4) de l'eau brute, adoucie ou mitigée au moyen du capteur de conductivité (34) et, à partir de celle-ci, détermination de la dureté totale G_{LF} de l'eau brute avec une ou plusieurs courbes caractéristiques d'étalonnage (K) stockées dans un dispositif de commande électronique (43),
- commande de la position de réglage du dispositif de mitigeage (5) au moyen du dispositif de commande électronique (43) en tenant compte de la dureté totale G_{LF} déterminée de l'eau brute, de manière à régler la dureté d'eau dans le courant d'eau mitigée V(t)_{verschnitt} à une valeur de consigne (SW) prédéfinie,
**caractérisé en ce**
**qu'**une dureté d'eau mitigée V_{NK} est déterminée de manière non conductimétrique (6) et comparée (8) avec la valeur de consigne (SW),
et **qu'**une ou plusieurs courbes caractéristiques d'étalonnage (K) pour déterminer la dureté totale G_{LF} de l'eau brute sont modifiées (10) lorsque la différence entre la dureté d'eau mitigée V_{NK} déterminée de manière non conductimétrique et la valeur de consigne (SW) dépasse une valeur limite, lesdites une ou plusieurs courbes caractéristiques d'étalonnage (K) étant modifiées de façon qu'il résulte de la conductivité électrique de l'eau brute, adoucie ou mitigée mesurée avec lesdites une ou plusieurs courbes caractéristiques d'étalonnage modifiées une dureté d'eau mitigée V_{LF} qui correspond à la dureté d'eau mitigée V_{NK} déterminée de manière non conductimétrique.

2. Procédé de fonctionnement d'une installation de traitement d'eau (31) comprenant
- un dispositif d'adoucissement (35) comprenant en particulier une résine échangeuse d'ions (38),
- un capteur de conductivité (34),
- un dispositif de mitigeage à réglage automatique pour mélanger un courant d'eau mitigée V(t)_{verschnitt} formé d'un premier courant partiel d'eau adoucie V(t)_{teil1weich} et d' un deuxième courant partiel d'eau brute V(t)ₜₑᵢₗ₂ᵣₒₕ,
lequel procédé présente les étapes suivantes :
- détermination de la conductivité électrique (4) de l'eau brute, adoucie ou mitigée au moyen du capteur de conductivité (34) et, à partir de celle-ci, détermination de la dureté totale G_{LF} de l'eau brute avec une ou plusieurs courbes caractéristiques d'étalonnage (K) stockées dans un dispositif de commande électronique (43),
- commande de la position de réglage du dispositif de mitigeage (5) au moyen du dispositif de commande électronique (43) en tenant compte de la dureté totale G_{LF} déterminée de l'eau brute, de manière à régler la dureté d'eau dans le courant d'eau mitigée V(t)_{verschnitt} à une valeur de consigne (SW) prédéfinie,
**caractérisé en ce**
**qu'**une dureté totale G_{NK} de l'eau brute est déterminée de manière non conductimétrique et comparée avec la dureté totale G_{LF} de l'eau brute déterminée par la conductivité,
et **qu'**une ou plusieurs courbes caractéristiques d'étalonnage (K) pour déterminer la dureté totale G_{LF} de l'eau brute sont modifiées (10) lorsque la différence entre la dureté totale G_{NK} de l'eau brute déterminée de manière non conductimétrique et la dureté totale G_{LF} déterminée par la conductivité dépasse une valeur limite, lesdites une ou plusieurs courbes caractéristiques d'étalonnage (K) étant modifiées de façon qu'il résulte de la conductivité électrique de l'eau brute, adoucie ou mitigée mesurée avec lesdites une ou plusieurs courbes caractéristiques d'étalonnage modifiées une dureté totale G_{LF} de l'eau brute qui correspond à la dureté totale G_{NK} de l'eau brute déterminée de manière non conductimétrique.

3. Procédé selon la revendication 1, **caractérisé en ce que** la valeur limite est considérée comme étant dépassée lorsque la dureté d'eau mitigée V_{NK} déterminée de manière non conductimétrique diffère de plus de +2,2 °dH ou -1,1 °dH de la valeur de consigne (SW).

4. Procédé selon la revendication 2, **caractérisé en ce que** la valeur limite est considérée comme étant dépassée lorsque la dureté totale G_{NK} déterininée de manière non conductimétrique diffère de la dureté totale G_{LF} déterminée par la conductivité de plus de +C*2,2 °dH ou -C*1,1 °dH, avec C = G_{LF}/SW.

5. Procédé selon une des revendications 1 à 4, **caractérisé en ce que** la détermination de dureté non conductimétrique de l'eau mitigée ou de l'eau brute est effectuée une seule fois.

6. Procédé selon une des revendications 1 à 4, **caractérisé en ce que** la détermination de dureté non conductimétrique de l'eau mitigée ou de l'eau brute est effectuée de manière répétée à intervalles réguliers.

7. Procédé selon une des revendications précédentes, **caractérisé en ce qu'**après une modification d'une ou plusieurs courbes caractéristiques d'étalonnage (K), le dispositif de commande électronique (43) recourt à une ou plusieurs courbes caractéristiques d'étalonnage standard (9b) lorsque le capteur de conductivité (34) enregistre une modification de la conductivité de l'eau brute, adoucie ou mitigée qui dépasse une valeur seuil (12).

8. Procédé selon la revendication 7, **caractérisé en ce qu'**une signalisation d'alarme est déclenchée (13) lorsque le capteur de conductivité (34) enregistre une modification de la conductivité de l'eau brute, adoucie ou mitigée qui dépasse la valeur seuil (12).

9. Procédé selon une des revendications précédentes, **caractérisé en ce que** le dispositif de commande électronique (43) utilise de nouveau une ou plusieurs courbes caractéristiques d'étalonnage actuellement plus utilisées pour déterminer la dureté totale G_{LF} de l'eau brute dès que le capteur de conductivité (34) enregistre dans la zone de l'eau brute, adoucie ou mitigée une conductivité à laquelle une modification desdites une ou plusieurs courbes caractéristiques d'étalonnage pour passer auxdites une ou plusieurs courbes caractéristiques d'étalonnage actuellement plus utilisées a été effectuée à un instant antérieur.

10. Procédé selon une des revendications précédentes, **caractérisé en ce que** la modification desdites une ou plusieurs courbes caractéristiques d'étalonnage (K) est effectuée en déterminant à nouveau la pente d'une courbe caractéristique d'étalonnage (K) formée par une droite partant de l'origine, qui représente la conductivité de l'eau brute LFᵣₒₕ en fonction de la dureté totale G_{LF} de l'eau brute.

11. Installation de traitement d'eau (31), comprenant
- un dispositif d'adoucissement (35), comprenant en particulier une résine échangeuse d'ions (38),
- un capteur de conductivité (34),
- un dispositif de mitigeage à réglage automatique pour mélanger un courant d'eau mitigée V(t)_{verschnitt} formé d'un premier courant partiel d'eau adoucie V(t)_{teil1weich} et d'un deuxième courant partiel d'eau brute V(t)_{teil2roch},
- un dispositif de commande électronique (43) au moyen duquel une dureté totale G_{LF} de l'eau brute peut être déterminée à partir d'une conductivité électrique (4) de l'eau brute, adoucie ou mitigée mesurée au moyen du capteur de conductivité (34) et avec une ou plusieurs courbes caractéristiques d'étalonnage (K) stockées dans le dispositif de commande électronique (43),
- et au moyen duquel la position de réglage du dispositif de mitigeage en tenant compte de la dureté totale G_{LF} déterminée de l'eau brute peut être commandée (5) de manière à régler la dureté d'eau dans le courant d'eau mitigée V(t)_{verschnitt} à une valeur de consigne (SW) prédéfinie,
**caractérisée en ce**
**que** l'installation de traitement d'eau (31) présente un dispositif d'entrée (49) pour une dureté d'eau mitigée V_{NK} déterminée de manière non conductimétrique, et que le dispositif de commande électronique (43) est conçu pour comparer (8) une dureté d'eau mitigée V_{NK} entrée, déterminée de manière non conductimétrique, avec la valeur de consigne (SW) prédéfinie, et modifier automatiquement (10) lesdites une ou plusieurs courbes caractéristiques d'étalonnage (K) de façon qu'il résulte de la conductivité électrique de l'eau brute, adoucie ou mitigée mesurée avec lesdites une ou plusieurs courbes caractéristiques d'étalonnage modifiées une dureté d'eau mitigée V_{LF} qui correspond à la dureté d'eau mitigée V_{NK} déterminée de manière non conductimétrique.

12. Installation de traitement d'eau (31), comprenant
- un dispositif d'adoucissement (35), comprenant en particulier une résine échangeuse d'ions (38),
- un capteur de conductivité (34),
- un dispositif de mitigeage à réglage automatique pour mélanger un courant d'eau mitigée V(t)_{verschnitt} formé d'un premier courant partiel d'eau adoucie V(t)_{teil1weich} et d'un deuxième courant partiel d'eau brute V(t)_{teil2roch},
- un dispositif de commande électronique (43) au moyen duquel une dureté totale G_{LF} de l'eau brute peut être déterminée à partir d'une conductivité électrique (4) de l'eau brute, adoucie ou mitigée mesurée au moyen du capteur de conductivité (34) et avec une ou plusieurs courbes caractéristiques d'étalonnage (K) stockées dans le dispositif de commande électronique (43),
- et au moyen duquel la position de réglage du dispositif de mitigeage en tenant compte de la dureté totale G_{LF} déterminée de l'eau brute peut être commandée (5) de manière à régler la dureté d'eau dans le courant d'eau mitigée V(t)_{versctnitt} à une valeur de consigne (SW) prédéfinie,
**caractérisée en ce**
**que** l'installation de traitement d'eau (31) présente un dispositif d'entrée (49) pour une dureté totale G_{NK} de l'eau brute déterminée de manière non conductimétrique, et que le dispositif de commande électronique (43) est conçu pour comparer une dureté totale G_{NK} de l'eau brute entrée, déterminée de manière non conductimétrique, avec la dureté totale G_{LF} de l'eau brute déterminée par la conductivité, et modifier automatiquement (10) lesdites une ou plusieurs courbes caractéristiques d'étalonnage (K) de façon qu'il résulte de la conductivité électrique de l'eau brute, adoucie ou mitigée mesurée avec lesdites une ou plusieurs courbes caractéristiques d'étalonnage modifiées une dureté totale G_{LF} de l'eau brute qui correspond à la dureté totale G_{NK} de l'eau brute déterminée de manière non conductimétrique.

13. Installation de traitement d'eau (31) selon une des revendications 11 ou 12, **caractérisée en ce que** pour modifier lesdites une ou plusieurs courbes caractéristiques d'étalonnage (K), le dispositif de commande électronique (43) est conçu pour déterminer à nouveau la pente d'une courbe caractéristique d'étalonnage (K) formée par une droite partant de l'origine, qui représente la conductivité de l'eau brute LFᵣₒₕ en fonction de la dureté totale G_{LF} de l'eau brute.
